# FASCICULE DE BREVET EUROPEEN

(11) **EP 3 572 321 B1**
(45) Date de publication et mention de la délivrance du brevet: **22.07.2020**
(21) Numéro de dépôt: 19173603.2
(22) Date de dépôt: 09.05.2019
(51) Int. Cl.: B64C 21/02, B64C 21/08, B64D 15/02, H05H 1/24, F15D 1/00, B64D 33/02, H05H 1/48

(54) **ELÉMENT D'AÉRONEF COMPORTANT UN BORD D'ATTAQUE PRÉSENTANT UN SYSTÈME POUR PRÉVENIR LE COLMATAGE DE TROUS RÉALISÉS DANS LE BORD D'ATTAQUE**
ELEMENT EINES LUFTFAHRZEUGS, DAS EINE VORDERKANTE MIT EINEM SYSTEM UMFASST, UM EINE VERSCHMUTZUNG DER IN DIESER VORDERKANTE AUSGEFÜHRTEN LÖCHER ZU VERMEIDEN
AIRCRAFT ELEMENT COMPRISING A LEADING EDGE HAVING A SYSTEM FOR PREVENTING CLOGGING OF HOLES MADE IN THE LEADING EDGE

(30) Priorité: 25.05.2018 FR 1854450
(43) Date de publication de la demande: 27.11.2019
(73) Titulaire: AIRBUS OPERATIONS (S.A.S.), 31060 Toulouse (FR)
(72) Inventeur: FAROUZ-FOUQUET, Mathias, 31060 TOULOUSE Cedex 9 (FR)
(74) Mandataire: Gicquel, Olivier Yves Gérard

(56) Documents cités:
- EP-A1- 2 913 266
- EP-A2- 2 738 104
- WO-A1-2005/113336
- WO-A1-2015/097164
- WO-A1-2017/189474
- US-A1- 2016 107 203
- US-B2- 8 128 037

## Description

### DOMAINE TECHNIQUE

La présente invention concerne un élément d'aéronef, comme par exemple une aile, ledit élément d'aéronef comportant un bord d'attaque et un système pour prévenir le colmatage de trous réalisés dans le bord d'attaque, ainsi qu'un aéronef comportant au moins un tel élément d'aéronef.

### ETAT DE LA TECHNIQUE ANTERIEURE

Une aile d'aéronef comporte un bord d'attaque qui est la partie avant du profil aérodynamique constituant l'aile. Pour assurer un écoulement laminaire le long du bord d'attaque, il est connu de percer le bord d'attaque d'une multitude de trous, classiquement de 50µm de diamètre dans une tôle d'environ 0,4 à 1 millimètres d'épaisseur, afin d'aspirer l'air extérieur depuis l'intérieur de l'aile à travers ces trous ou pour expulser l'air depuis l'intérieur de l'aile vers l'extérieur, tel que décrit dans les documents WO2005/113336 A1, EP 2913266 A1, US 8128037 B2 et US 2016/107203.

Ce bord d'attaque étant en outre souvent sujet au dépôt de résidus organiques, ces trous peuvent être obstrués par ces résidus et ils ne peuvent plus remplir correctement leur fonction et l'écoulement de l'air n'est, dès lors, plus laminaire mais turbulent.

Les documents WO2015/097164 A1, WO2017/189474 A1 présentent des systèmes pour créer des discontinuités sur des surfaces aérodynamiques.

Le document EP 2738104 A2 présente un système de transfert thermique comportant une surface poreuse.

### EXPOSE DE L'INVENTION

Un objet de la présente invention est de proposer un élément d'aéronef comportant un bord d'attaque qui est percé d'une multitude de trous et équipé d'un système permettant d'éliminer les dépôts organiques qui se logent dans les trous.

A cet effet, est proposé un élément d'un aéronef, ledit élément comportant :
- un bord d'attaque formant un caisson délimité par une paroi et une peau constituant un intrados et un extrados de l'élément et percée de trous, où la paroi relie une face intérieure de l'intrados à une face intérieure de l'extrados, où la peau comporte une paroi intérieure électriquement conductrice, une paroi extérieure électriquement conductrice et une paroi intermédiaire disposée entre la paroi intérieure et la paroi extérieure et étant électriquement isolante,
- une pompe prévue pour aspirer l'air présent dans le caisson et/ou pour injecter de l'air dans le caisson,

ledit élément étant caractérisé en ce que chaque trou est équipé d'un système anti-colmatage qui comporte :
- une base électriquement conductrice et en continuité électrique avec la paroi intérieure,
- une aiguille réalisée dans un matériau piézoélectrique, et logée dans le trou et dont une extrémité est solidaire de la base,
- un générateur électrique destiné à générer un courant électrique dans l'aiguille,
où la forme de l'aiguille est telle qu'un espace est créé entre l'aiguille et les bords du trou, et où la base présente un évidement dans le prolongement de l'espace.

Une telle installation permet d'éliminer les résidus qui sont logés dans les trous.

Avantageusement, le générateur électrique est électriquement connecté entre la paroi intérieure et la paroi extérieure.

Selon un mode de réalisation particulier, le système anti-colmatage comporte un capuchon électriquement conducteur et entourant l'extrémité libre de l'aiguille.

Selon un mode de réalisation particulier, le système anti-colmatage comporte un insert électriquement conducteur et inséré dans l'extrémité libre de l'aiguille.

Selon un mode de réalisation particulier, l'aiguille et le capuchon, lorsqu'il est présent, présentent chacun la forme d'un cylindre dont le diamètre est le diamètre du trou et présentent au moins un méplat sur toute la hauteur, et en ce que chaque méplat se prolonge sur la base pour former l'évidement.

Selon un mode de réalisation particulier, l'aiguille et le capuchon, lorsqu'il est présent, présentent chacun la forme d'un cylindre dont le diamètre est inférieur au diamètre du trou et qui est coaxial avec le trou.

L'invention propose également un aéronef comportant au moins un élément selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 montre une vue de dessus d'un aéronef selon l'invention,
la Fig. 2 montre une vue de côté et en coupe selon la ligne II-II d'un bord d'attaque d'une aile de la Fig. 1,
la Fig. 3 montre un agrandissement du détail III de la Fig. 2 dans une première position d'une aiguille selon un premier mode de réalisation de l'invention,
la Fig. 4 montre un agrandissement du détail III de la Fig. 2 dans une deuxième position d'une aiguille,
la Fig. 5 montre une vue en perspective d'une aiguille selon un premier mode de réalisation de l'invention,
la Fig. 6 montre une vue de dessus de l'aiguille de la Fig. 5 en position d'utilisation,
la Fig. 7 montre un agrandissement du détail III de la Fig. 2 dans la première position de l'aiguille selon un deuxième mode de réalisation de l'invention,
la Fig. 8 montre une vue en perspective d'une aiguille selon un troisième mode de réalisation de l'invention,
la Fig. 9 montre un agrandissement du détail III de la Fig. 2 dans la première position de l'aiguille selon le troisième mode de réalisation de l'invention, et
la Fig. 10 montre une vue de dessus de l'aiguille de la Fig. 8 en position d'utilisation.

### EXPOSE DETAILLE DE MODES DE REALISATION

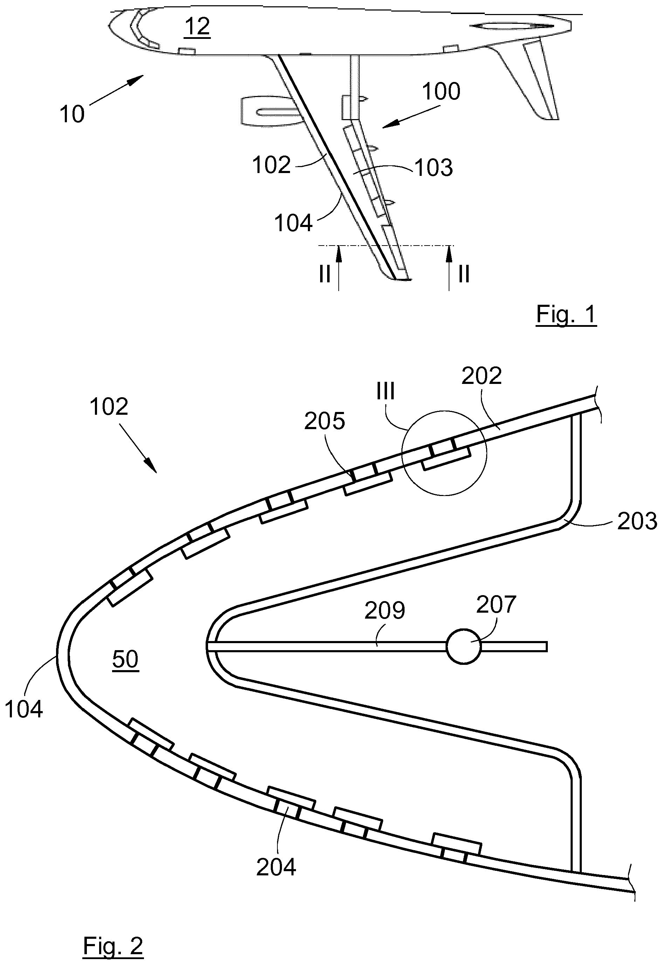

La Fig. 1 montre un aéronef 10 qui présente un fuselage 12 de part et d'autre duquel est fixée une aile 100 qui présente une partie principale 103 et un bord d'attaque 102 qui s'étend au-dessus et au-dessous de l'aile 100 en avant de la partie principale 103. La référence 104 montre une ligne de bord d'attaque qui est la ligne de séparation entre l'intrados et l'extrados du bord d'attaque 102.

La Fig. 2 montre le bord d'attaque 102 en coupe. Le bord d'attaque 102 prend la forme d'un caisson 50 qui est délimité par une peau 202 et une paroi 203. La peau 202 constitue un intrados et un extrados de l'aile 100, c'est-à-dire qu'elle prend la forme d'un U ouvert vers l'arrière de l'aéronef 10. La peau 202 comporte une face extérieure sur laquelle s'écoule l'air et une face intérieure orientée vers l'intérieur du bord d'attaque 102 et la paroi 203 relie la face intérieure de l'intrados à la face intérieure de l'extrados.

La peau 202 est percée d'une multitude de trous 205 qui assurent le passage de l'air extérieur vers l'intérieur du caisson 50 et inversement.

Afin d'assurer une aspiration de l'air depuis l'extérieur à travers les trous 205 ou un refoulement de l'air vers l'extérieur à travers les trous 205, l'aile 100 est équipée d'une pompe 207 qui est prévue pour aspirer l'air présent dans le caisson 50 et/ou pour injecter de l'air dans le caisson 50. Ici, la pompe 207 est reliée à l'intérieur du caisson 50 par une canalisation 209.

Chaque trou 205 est équipé d'un système anti-colmatage 204 et présente préférentiellement un diamètre de l'ordre 750µm.

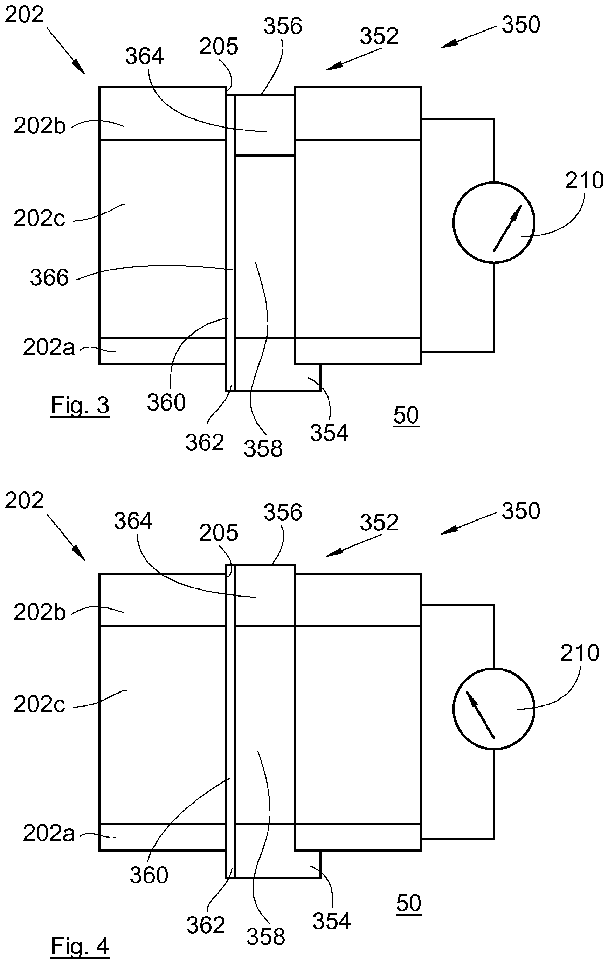

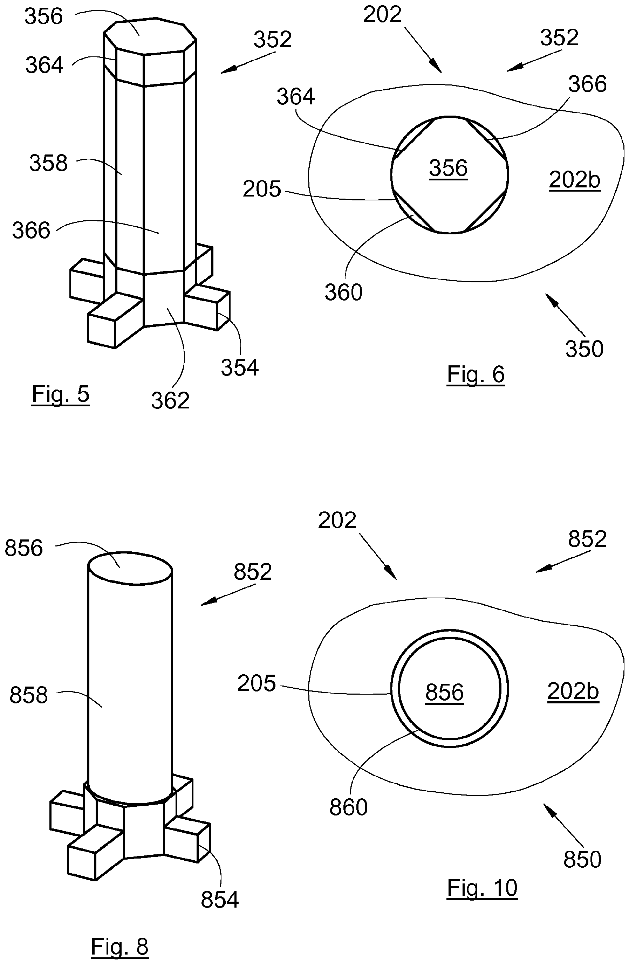

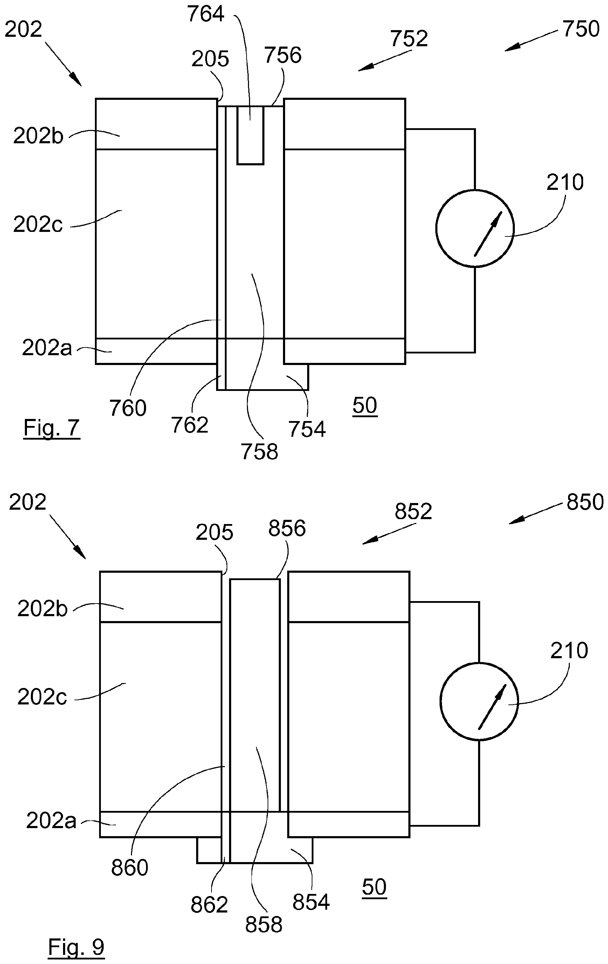

Les Figs. 3 à 6 montrent un système anti-colmatage 350 selon un premier mode de réalisation de l'invention, la Fig. 7 montre un système anti-colmatage 750 selon un deuxième mode de réalisation de l'invention, et les Figs. 8 à 10 montrent un système anti-colmatage 850 selon un troisième mode de réalisation de l'invention.

Dans chacun des modes de réalisation, la peau 202 comporte une paroi intérieure 202a, une paroi extérieure 202b et une paroi intermédiaire 202c.

La paroi intérieure 202a est orientée vers l'intérieur du bord d'attaque 102 et donc ici vers l'intérieur du caisson 50. La paroi intérieure 202a est électriquement conductrice. L'une des faces de la paroi intérieure 202a forme la face intérieure de la peau 202.

La paroi extérieure 202b est orientée vers l'extérieur du bord d'attaque 102 et est en contact avec l'air qui s'écoule autour du bord d'attaque 102. La paroi extérieure 202b est électriquement conductrice. L'une des faces de la paroi extérieure 202b forme la face extérieure de la peau 202.

La paroi intermédiaire 202c est disposée entre la paroi intérieure 202a et la paroi extérieure 202b. La paroi intermédiaire 202c est électriquement isolante et forme un diélectrique.

Chaque trou 205 traverse la paroi intérieure 202a, la paroi extérieure 202b et la paroi intermédiaire 202c.

Dans chaque mode de réalisation de l'invention, le système anti-colmatage 350, 750, 850 comporte, pour chaque trou 205 dont il faut éviter le colmatage, une aiguille 358, 758, 858 logée dans le trou 205.

Le système anti-colmatage 350 comporte pour chaque aiguille 358, 758, 858, une base 354, 754, 854 solidaire d'une extrémité de l'aiguille 358, 758, 858. La base 354, 754, 854 est électriquement conductrice et est en continuité électrique avec la paroi intérieure 202a. La continuité électrique est réalisée par exemple par soudage de la base 354, 754, 854 à la paroi intérieure 202a. Dans les différents modes de réalisation de l'invention présentés ici, la base 354, 754, 854 présente une partie plus large que le trou 205 et forme ainsi un rebord qui vient en appui contre la face de la paroi intérieure 202a qui est orientée vers l'intérieur.

L'aiguille 358, 758, 858 comporte une extrémité distale qui forme l'extrémité libre 356, 756, 856 de l'aiguille 358, 758, 858 et qui se positionne en regard de la paroi extérieure 202b.

La forme de l'aiguille 358, 758, 858 est telle qu'un espace 360, 760, 860 est créé entre l'aiguille 358, 758, 858 et les bords du trou 205 afin d'autoriser le passage de l'air soufflé ou aspiré par la pompe 207. De la même manière, la base 354, 754, 854 est conformée pour laisser un espace libre qui prolonge l'espace 360, 760, 860. La base 354, 754, 854 présente ainsi un évidement 362, 762, 862 dans le prolongement de l'espace 360, 760, 860.

L'aiguille 358, 758, 858 est réalisée dans un matériau piézoélectrique qui se déforme lorsqu'un courant électrique le traverse.

L'aiguille 358, 758, 858 est telle qu'en fonction de l'intensité du courant électrique qui la traverse, se raccourcit ou s'allonge.

Le système anti-colmatage 350, 750, 850 comporte également un générateur électrique 210 destiné à générer un courant électrique alternatif dans l'aiguille 358, 758, 858.

Comme le montrent les Figs. 3 et 4, lorsqu'une première intensité (Fig. 3) est appliquée à l'aiguille 358, celle-ci se raccourcit et lorsqu'une deuxième intensité (Fig. 4) est appliquée à l'aiguille 358, celle-ci s'allonge. Ainsi, si des résidus sont logés dans le trou 205, le mouvement de va-et-vient de l'aiguille 358 va décoller et déloger les résidus. Le fonctionnement est identique pour tous les modes de réalisation.

Le courant peut être appliqué entre la base 354, 754, 854 et l'aiguille 358, 758, 858 et en particulier son extrémité libre 356, 756, 856.

Mais, afin d'appliquer le courant à l'ensemble des aiguilles 354, 754, 854 simultanément, le courant est appliqué entre la paroi intérieure 202a et la paroi extérieure 202b. Comme ces deux parois 202a-b sont isolées l'une de l'autre, le courant va traverser chaque aiguille 358, 758, 858 depuis son extrémité libre 356, 756, 856 et la base 354, 754, 854 associée. Le générateur électrique 210 est donc électriquement connecté entre la paroi intérieure 202a et la paroi extérieure 202b.

L'extrémité libre 356 de l'aiguille 358 peut être nue, mais comme cela est montré pour le premier mode de réalisation de l'invention représenté aux Figs. 3 à 6, le système anti-colmatage 350 comporte un capuchon 364 électriquement conducteur et entourant l'extrémité libre 356 de l'aiguille 358 afin de faciliter le passage du courant entre la paroi extérieure 202b et l'aiguille 358.

Dans le premier mode de réalisation de l'invention, l'aiguille 358 et le capuchon 364, lorsqu'il est présent, présentent chacun la forme d'un cylindre dont le diamètre est le diamètre du trou 205 afin d'assurer le contact et présentent au moins un méplat 366 sur toute la hauteur pour assurer le passage de l'air. Ici, il y a quatre méplats 366 répartis régulièrement autour de l'aiguille 358.

Chaque méplat 366 forme l'espace 360 et chaque méplat 366 se prolonge sur la base 354 pour former l'évidement 362. La distance maximale entre le méplat 366 et le bord du trou 205 est préférentiellement de l'ordre de 50 µm.

Dans le deuxième mode de réalisation de l'invention représenté à la Fig. 7, le système anti-colmatage 750 comporte un insert 764 électriquement conducteur et inséré dans l'extrémité libre 756 de l'aiguille 758. L'insert 764 affleure la surface de l'extrémité libre 756.

Dans le deuxième mode de réalisation de l'invention présenté ici, l'aiguille 758 et la base 754 prennent les mêmes formes que celles de l'aiguille 358 et de la base 354 du premier mode de réalisation. Lorsque le générateur électrique 210 est activé, le courant électrique va se transférer au niveau de l'extrémité libre 756 soit par arc électrique au niveau de l'espace 760 générant ainsi un effet plasma qui aide à détruire les résidus présents, soit par conductivité entre l'aiguille 758 et la paroi extérieure 202b.

Dans le troisième mode de réalisation de l'invention représenté aux Figs. 8 à 10, l'aiguille 858 prend la forme d'un cylindre dont le diamètre est inférieur au diamètre du trou 205 et qui est coaxial avec le trou 205. La différence de diamètre crée l'espace 860 et est préférentiellement de l'ordre de 100µm.

Lorsque le générateur électrique 210 est activé, le courant électrique va se transférer au niveau de l'extrémité libre 856 par arc électrique au niveau de l'espace 860 générant ainsi un effet plasma qui aide à détruire les résidus présents.

Dans ce troisième mode de réalisation, il est également possible de prévoir la mise en place d'un capuchon électriquement conducteur et entourant l'extrémité libre 856 de l'aiguille 858, ou d'un insert électriquement conducteur et inséré dans l'extrémité libre 856 de l'aiguille 858.

Préférentiellement, la face du système anti-colmatage 350, 750, 850 qui est au niveau de la face extérieure de la peau 202, c'est-à-dire la face de l'extrémité libre 356, 756, 856 de l'aiguille 358, 758, 858 ou du capuchon 364 lorsqu'il est présent et de l'insert 764 lorsqu'il est présent affleure ladite face extérieure de la peau 202 lorsqu'aucun courant n'est appliqué afin d'assurer une surface aérodynamique.

Un exemple de fabrication d'une aile 100 comportant un système anti-colmatage 350, 750, 850 selon l'invention, consiste à percer la peau 202 à l'aide d'une perceuse afin de réaliser le trou 205, présentant par exemple un diamètre de 0,75 mm H7.

Le système anti-colmatage 350, 750, 850 est introduit dans le trou 205 par l'intérieur en amenant la base 354, 754, 854 contre la paroi intérieure 202a et en la fixant par soudage par exemple.

Dans le premier mode de réalisation et le deuxième mode de réalisation, le diamètre de l'aiguille 358, 758 et du capuchon 364 lorsqu'il existe est par exemple de 0,75 mm g6.

Dans le premier mode de réalisation, la longueur de l'aiguille 358 ou du capuchon 364 lorsqu'il existe, est telle que l'extrémité de l'aiguille 358 ou du capuchon 364 dépasse au-delà de la surface extérieure de la peau 202. L'extrémité est ensuite meulée pour venir affleurer la surface extérieure de la peau 202.

Dans le deuxième mode de réalisation de l'invention, les longueurs de l'aiguille 758 et de l'insert 764 sont telles que les extrémités de l'aiguille 358 et de l'insert 764 dépassent au-delà de la surface extérieure de la peau 202. Les extrémités sont ensuite meulées pour venir affleurer la surface extérieure de la peau 202.

Dans le troisième mode de réalisation, le diamètre de l'aiguille 858 est par exemple de 0,65 mm.

Dans le troisième mode de réalisation, la longueur de l'aiguille 858 est telle que l'extrémité de l'aiguille 858 dépasse au-delà de la surface extérieure de la peau 202. L'extrémité est ensuite meulée pour venir affleurer la surface extérieure de la peau 202.

Bien que l'invention ait été décrite plus particulièrement dans le cas d'une aile, elle s'applique de la même manière à tout élément d'un aéronef présentant un bord d'attaque, comme par exemple une dérive, un stabilisateur, une entrée d'air d'un moteur ou une nacelle motrice.

## Revendications

1. Elément (100) d'un aéronef (10), ledit élément (100) comportant :
- un bord d'attaque (102) formant un caisson (50) délimité par une paroi (203) et une peau (202) constituant un intrados et un extrados de l'élément (100) et percée de trous (205), où la paroi (203) relie une face intérieure de l'intrados à une face intérieure de l'extrados, où la peau (202) comporte une paroi intérieure (202a) électriquement conductrice, une paroi extérieure (202b) électriquement conductrice et une paroi intermédiaire (202c) disposée entre la paroi intérieure (202a) et la paroi extérieure (202b) et étant électriquement isolante,
- une pompe (207) prévue pour aspirer l'air présent dans le caisson (50) et/ou pour injecter de l'air dans le caisson (50),
ledit élément (100) étant **caractérisé en ce que** chaque trou (205) est équipé d'un système anti-colmatage (350, 750, 850) qui comporte :
- une base (354, 754, 854) électriquement conductrice et en continuité électrique avec la paroi intérieure (202a),
- une aiguille (358, 758, 858) réalisée dans un matériau piézoélectrique, et logée dans le trou (205) et dont une extrémité est solidaire de la base (354, 754, 854),
- un générateur électrique (210) destiné à générer un courant électrique dans l'aiguille (358, 758, 8528),
où la forme de l'aiguille (358, 758, 858) est telle qu'un espace (360, 760, 860) est créé entre l'aiguille (358, 758, 858) et les bords du trou (205), et où la base (354, 754, 854) présente un évidement (362, 762, 862) dans le prolongement de l'espace (360, 760, 860).

2. Elément (100) selon la revendication 1, **caractérisé en ce que** le générateur électrique (210) est électriquement connecté entre la paroi intérieure (202a) et la paroi extérieure (202b).

3. Elément (100) selon l'une des revendications 1 ou 2, **caractérisé en ce que** le système anti-colmatage (350) comporte un capuchon (364) électriquement conducteur et entourant l'extrémité libre (356) de l'aiguille (358).

4. Elément (100) selon l'une des revendications 1 ou 2, **caractérisé en ce que** le système anti-colmatage (750) comporte un insert (764) électriquement conducteur et inséré dans l'extrémité libre (756) de l'aiguille (758).

5. Elément (100) selon l'une des revendications précédentes, **caractérisé en ce que** l'aiguille (358) présente la forme d'un cylindre dont le diamètre est le diamètre du trou (205) et présente au moins un méplat (366) sur toute la hauteur, et **en ce que** chaque méplat (366) se prolonge sur la base (354) pour former l'évidement (362).

6. Elément (100) selon l'une des revendications 1 à 4, **caractérisé en ce que** l'aiguille (858) présente la forme d'un cylindre dont le diamètre est inférieur au diamètre du trou (205) et qui est coaxial avec le trou (205).

7. Elément (100) selon les revendications 3 et 5, **caractérisé en ce que** le capuchon (364) présente la forme d'un cylindre dont le diamètre est le diamètre du trou (205) et présente au moins un méplat (366) sur toute la hauteur, et **en ce que** chaque méplat (366) se prolonge sur la base (354) pour former l'évidement (362).

8. Elément (100) selon les revendications 3 et 6, **caractérisé en ce que** le capuchon présente la forme d'un cylindre dont le diamètre est inférieure au diamètre du trou (205) et qui est coaxial avec le trou (205).

9. Aéronef (10) comportant au moins un élément (100) selon l'une des revendications précédentes.

## Patentansprüche

1. Element (100) eines Luftfahrzeugs (10), wobei das Element (100) Folgendes umfasst:
- eine Vorderkante (102), die einen Kasten (50) ausbildet, der durch eine Wand (203) und eine Haut (202), welche eine Druckseite und eine Saugseite des Elements (100) bildet und mit Löchern (205) versehen ist, abgegrenzt wird, wobei die Wand (203) eine Innenfläche der Druckseite mit einer Innenfläche der Saugseite verbindet, wobei die Haut (202) eine elektrisch leitende Innenwand (202a), eine elektrisch leitende Außenwand (202b) und eine Zwischenwand (202c), die zwischen der Innenwand (202a) und der Außenwand (202b) angeordnet und elektrisch isolierend ist, umfasst,
- eine Pumpe (207), die dafür vorgesehen ist, die in dem Kasten (50) vorhandene Luft anzusaugen und/oder Luft in den Kasten (50) einzuführen,
wobei das Element (100) **dadurch gekennzeichnet ist, dass** jedes Loch (205) mit einem Antiverschmutzungssystem (350, 750, 850) ausgerüstet ist, das Folgendes umfasst:
- eine elektrisch leitende Basis (354, 754, 854), die mit der Innenwand (202a) elektrisch verbunden ist,
- eine Nadel (358, 758, 858), die aus einem piezoelektrischen Material hergestellt ist und sich in dem Loch (205) befindet und von der ein Ende fest mit der Basis (354, 754, 854) verbunden ist,
- einen elektrischen Generator (210), der dazu bestimmt ist, einen elektrischen Strom in der Nadel (358, 758, 8528) zu erzeugen,
wobei die Form der Nadel (358, 758, 858) derart ist, dass zwischen der Nadel (358, 758, 858) und den Kanten des Lochs (205) ein Raum (360, 760, 860) gebildet wird, und wobei die Basis (354, 754, 854) eine Aussparung (362, 762, 862) in der Verlängerung des Raums (360, 760, 860) aufweist.

2. Element (100) nach Anspruch 1, **dadurch gekennzeichnet, dass** der elektrische Generator (210) zwischen der Innenwand (202a) und der Außenwand (202b) elektrisch verbunden ist.

3. Element (100) nach einem der Ansprüche 1 oder 2, **dadurch gekennzeichnet, dass** das Antiverschmutzungssystem (350) eine elektrisch leitende Kappe (364) umfasst, die das freie Ende (356) der Nadel (358) umgibt.

4. Element (100) nach einem der Ansprüche 1 oder 2, **dadurch gekennzeichnet, dass** das Antiverschmutzungssystem (750) einen elektrisch leitenden Einsatz (764) umfasst, der in das freie Ende (756) der Nadel (758) eingeführt ist.

5. Element (100) nach einem der vorhergehenden Ansprüche, **dadurch gekennzeichnet, dass** die Nadel (358) die Form eines Zylinders aufweist, dessen Durchmesser der Durchmesser des Lochs (205) ist, und mindestens eine Abflachung (366) über die gesamte Höhe aufweist und dass sich jede Abflachung (366) über die Basis (354) fortsetzt, um die Aussparung (362) zu bilden.

6. Element (100) nach einem der Ansprüche 1 bis 4, **dadurch gekennzeichnet, dass** die Nadel (858) die Form eines Zylinders aufweist, dessen Durchmesser kleiner als der Durchmesser des Lochs (205) ist und der zu dem Loch (205) koaxial ist.

7. Element (100) nach den Ansprüchen 3 und 5, **dadurch gekennzeichnet, dass** die Kappe (364) die Form eines Zylinders aufweist, dessen Durchmesser der Durchmesser des Lochs (205) ist, und mindestens eine Abflachung (366) über die gesamte Höhe aufweist und dass sich jede Abflachung (366) über die Basis (354) fortsetzt, um die Aussparung (362) zu bilden.

8. Element (100) nach den Ansprüchen 3 und 6, **dadurch gekennzeichnet, dass** die Kappe die Form eines Zylinders aufweist, dessen Durchmesser kleiner als der Durchmesser des Lochs (205) ist und der zu dem Loch (205) koaxial ist.

9. Luftfahrzeug (10), das mindestens ein Element (100) nach einem der vorhergehenden Ansprüche umfasst.

## Claims

1. Element (100) of an aircraft (10), said element (100) having:
- a leading edge (102) forming a box structure (50) delimited by a wall (203) and a skin (202) that constitutes a pressure face and a suction face of the element (100) and is pierced with holes (205), wherein the wall (203) connects an inner face of the pressure face to an inner face of the suction face, wherein the skin (202) has an electrically conductive inner wall (202a), an electrically conductive outer wall (202b) and an intermediate wall (202c) that is disposed between the inner wall (202a) and the outer wall (202b) and is electrically insulating,
- a pump (207) provided to pump out the air present in the box structure (50) and/or to inject air into the box structure (50),
said element (100) being **characterized in that** each hole (205) is equipped with an anti-clogging system (350, 750, 850) that has:
- an electrically conductive base (354, 754, 854) that is electrically continuous with the inner wall (202a),
- a needle (358, 758, 858) made of a piezoelectric material and housed in the hole (205), and one end of which is secured to the base (354, 754, 854),
- an electric generator (210) intended to generate an electric current in the needle (358, 758, 8528),
wherein the shape of the needle (358, 758, 858) is such that a space (360, 760, 860) is created between the needle (358, 758, 858) and the edges of the hole (205), and wherein the base (354, 754, 854) has a recess (362, 762, 862) in the continuation of the space (360, 760, 860) .

2. Element (100) according to Claim 1, **characterized in that** the electric generator (210) is electrically connected between the inner wall (202a) and the outer wall (202b).

3. Element (100) according to either of Claims 1 and 2, **characterized in that** the anti-clogging system (350) has an electrically conductive cap (364) surrounding the free end (356) of the needle (358).

4. Element (100) according to either of Claims 1 and 2, **characterized in that** the anti-clogging system (750) has an electrically conductive insert (764) inserted into the free end (756) of the needle (758).

5. Element (100) according to one of the preceding claims, **characterized in that** the needle (358) has the shape of a cylinder, the diameter of which is the diameter of the hole (205), and has at least one flat (366) along its entire height, and **in that** each flat (366) continues over the base (354) to form the recess (362).

6. Element (100) according to one of Claims 1 to 4, **characterized in that** the needle (858) has the shape of a cylinder, the diameter of which is smaller than the diameter of the hole (205) and which is coaxial with the hole (205).

7. Element (100) according to Claims 3 and 5, **characterized in that** the cap (364) has the shape of a cylinder, the diameter of which is the diameter of the hole (205), and has at least one flat (366) along its entire height, and **in that** each flat (366) continues over the base (354) to form the recess (362).

8. Element (100) according to Claims 3 and 6, **characterized in that** the cap has the shape of a cylinder, the diameter of which is smaller than the diameter of the hole (205) and which is coaxial with the hole (205).

9. Aircraft (10) having at least one element (100) according to one of the preceding claims.
